(19) Europäisches Patentamt / European Patent Office / Office européen des brevets

(11) **EP 2 621 064 A1**

(12) **EUROPEAN PATENT APPLICATION**

(43) Date of publication:
    **31.07.2013 Bulletin 2013/31**

(51) Int Cl.:
    **H02K 29/03** *(2006.01)*    **H02K 1/27** *(2006.01)*

(21) Application number: **12195993.6**

(22) Date of filing: **07.12.2012**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(30) Priority: **25.01.2012 IT PN20120005**

(71) Applicant: **Nidec Sole Motor Corporation S.r.l.**
    **33170 Pordenone (IT)**

(72) Inventor: **Grava, Alberto**
    **33170 Pordenone (IT)**

(74) Representative: **Giugni, Valter et al**
    **Propria S.r.l.**
    **Via della Colonna 35**
    **33170 Pordenone (IT)**

(54) **Electric motor with improved permanent magnet rotor**

(57)    Permanent magnet electric motor with a stator provided with a plurality of ferromagnetic laminations, a rotor with a plurality of ferromagnetic poles arranged towards its outer face, and rotating inside the stator which, as the rotor, is made by a respective stator stack.

    The rotor is also provided with a plurality of seats which section the respective laminations parallel to motor central axis, and the outer perimeter of the rotor stack is made up with a plurality of leaning lobes centred on a respective bisector of the relevant angle, alternate to a respective plurality of recesses, wherein each of said lobes is inscribed inside a circle centered on the rotor axis.

    Each of said leaning lobes shows an outer shape resulting by the composition of two circular arcs wherein each of said arcs is centered on a respective center comprised inside of the area of the respective angular sector and symmetrical with respect to its bisector, and the segment which is tangent to said two circular arcs is comprised between the respective tangent points.

FIG.5

EP 2 621 064 A1

## Description

The present invention relates to a permanent-magnet electric motor, comprising an external stator and an internal rotor, wherein said rotor comprises substantially a stack of ferromagnetic laminations (rotor stack) wherein are arranged a plurality of magnetic or magnetized elements suitable to magnetically interact with the electrical windings applied to the stator.

It is well known that said types of electric motors, in the most conventional configuration, have a particular intrinsic drawback. Such drawback lies in the fact that the rotor tends to move jerkily when it is rotated with the stator windings not electrically supplied, and this causes some problem of alignment of the rotor (cogging torque).

Moreover, during the operation of the motor vibrations are generated with consequent continuous noise, which is notoriously unappreciated when said motors are used in a domestic environment, as for example in household washing machines and dishwashers.

Patent WO 2009/098172 discloses a permanent magnet motor suitable to limit the above-mentioned drawback; the solution identified therein consists in adequately shaping both the external profile of the rotor stack, in the portions of the same wherein are housed the magnetic elements, and the section of the same magnetic elements.

Although it is an improvement, this solution still does not completely solve the problem mentioned above; moreover, it also has the disadvantage that, being said motor built in a modular manner, it favours the building methods used to manufacture a whole range of motors, rather than optimizing a single type of motor.

The two American patents US 2004/0041486 and US 2004/0041489 disclose two types of permanent magnet electric motors that tend to resolve the following problems: the first of said patents aims at producing a motor with a very low level of vibrations (chattering), but that however delivers a low torque, and also with a limited efficiency.

The second of the two above patents has substantially inverse characteristics; in other words, it discloses a motor with a high torque, but without a significantly reduced vibration.

A main objective of the present invention is therefore to provide a permanent magnet electric motor, wherein are advantageously found both its construction simplicity with the capacity of delivering high torques, while substantially eliminating vibrations and therefore the noise typical with this type of motor.

This type of motor must be such as to allow its construction with freely available materials and technologies, while guaranteeing sure and easily attainable results.

This and other objectives are achieved with a permanent magnet electric motor built and operating according to the enclosed claims.

Characteristics and advantages of the invention will be evident from the description which follows, given by way of non-limiting example, with reference to the enclosed drawings, wherein:

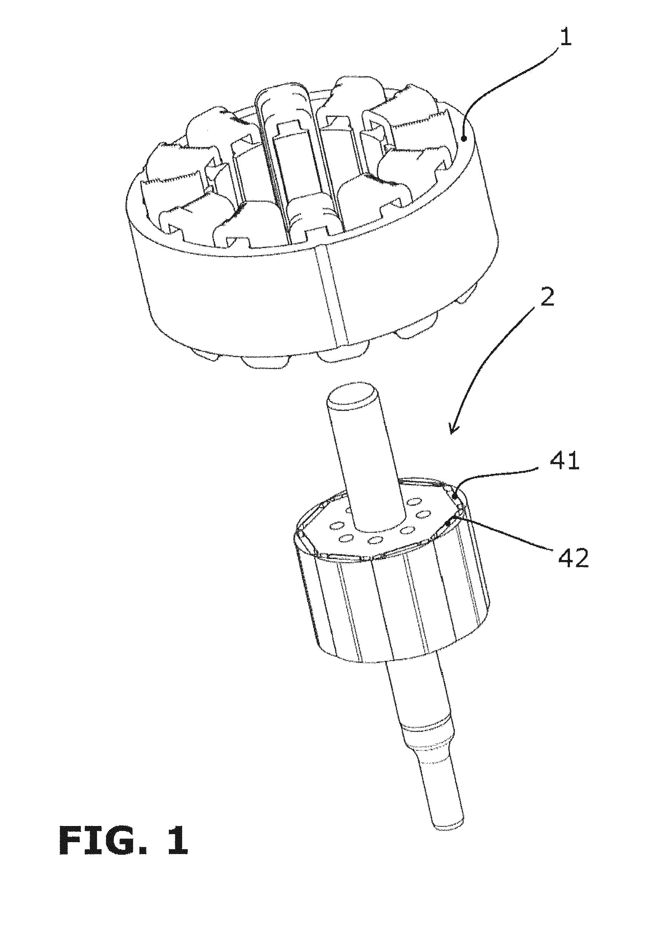

- Fig. 1 illustrates an exploded external view in perspective of an electric motor of general type, which thus also includes the type with permanent magnets;

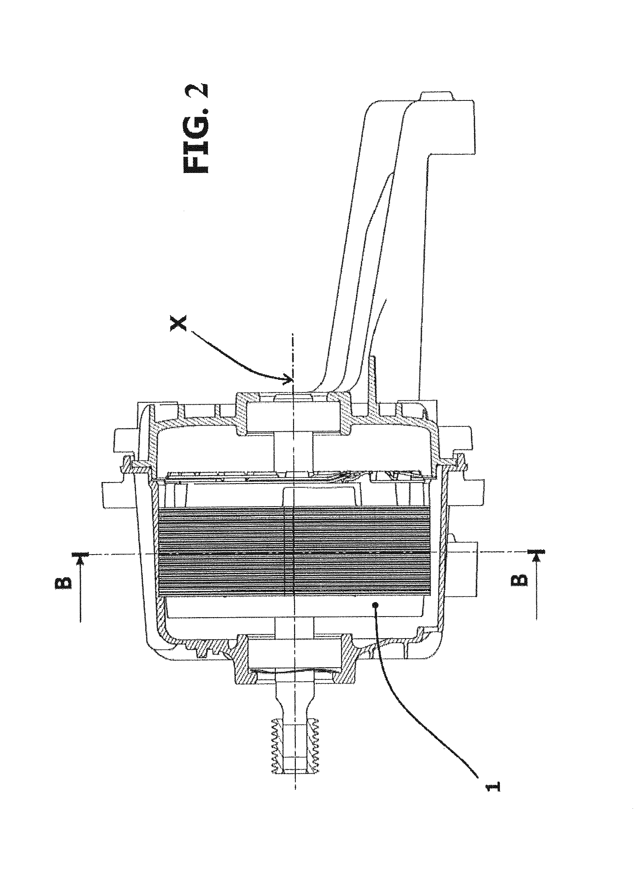

- Fig. 2 is a cross section of the motor of Fig. 1 according to a plane passing through the axis of rotation of the rotor shaft;

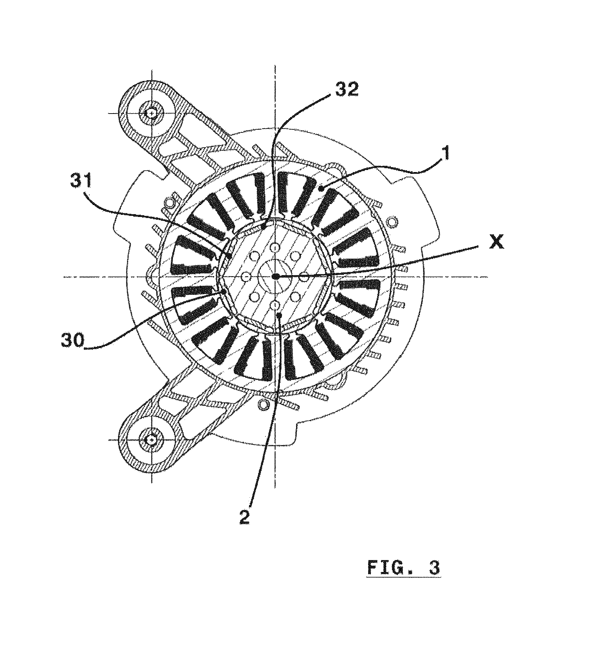

- Fig. 3 is a cross sectional view that refers to the B-B cross-sectional plane of Fig. 2, orthogonal to the axis of rotation of the rotation shaft;
- Fig. 4 is an enlarged view of a delimited portion of the cross section of Fig. 3;
- Fig. 5 is a further enlargement of a specific area of Fig. 4;
- Fig. 6 is a view similar to Fig. 4 but which, for greater clarity, is used here to offer further details.

With reference to the above Figures, a permanent magnet electric motor according to the invention includes:

- a stator 1 of substantially cylindrical shape and provided with a plurality of ferromagnetic poles, and made up of a stator pack comprising a plurality of ferromagnetic laminations stacked and arranged so as to be orthogonal to a central axis (X), which in this case coincides with the axis of rotation of the rotor;
- a rotor 2 of substantially cylindrical shape, made up of a rotor stack comprising a plurality of ferromagnetic laminations stacked and arranged so as to be orthogonal to said central axis (X), said rotor being applied inside said stator, and comprising a plurality of seats 30, 31, 32, ... arranged inside said rotor stack, substantially of lowered shape and oriented parallel to said central axis (X), perimetrically distributed close to the external surface 3 of said rotor, and suitable to lodge a respective plurality of permanent magnets 41, 42, ....

The general structure of said motor, consisting of a rotor rotating inside the stator, is well known, and is not particularly relevant for the purposes of the invention.

In fact, the invention refers specifically to some constructive characteristics, in particular to some angles and/or relationships between angles, and to some dimensions and/or relationships between dimensions that are realized in the motor of the invention and can be better seen by cross-sectioning both the rotor and the stator with the plane "B-B" orthogonal to said central axis X.

The characteristics of the invention can be particularly well definable by looking at the drawings of the cross sections of the stator and the rotor, thus obtained.

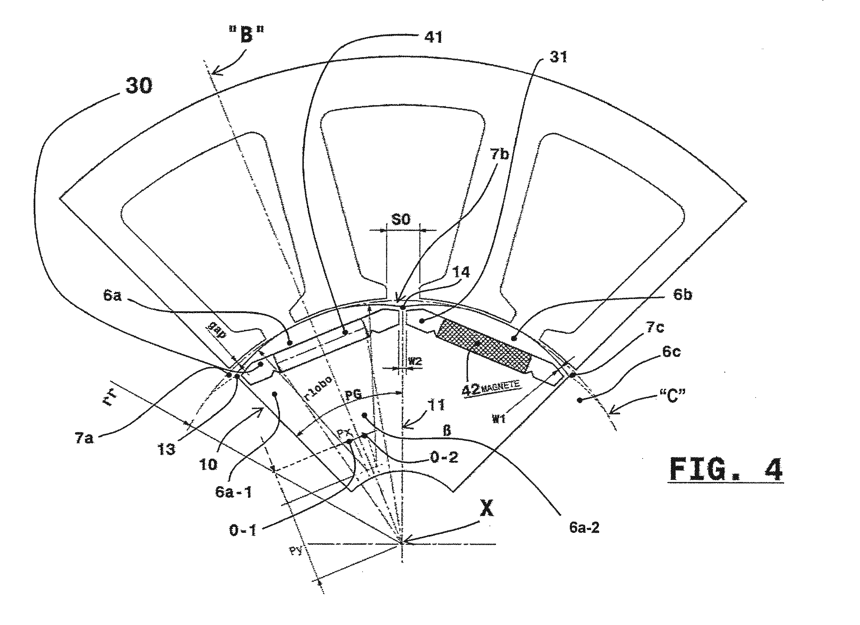

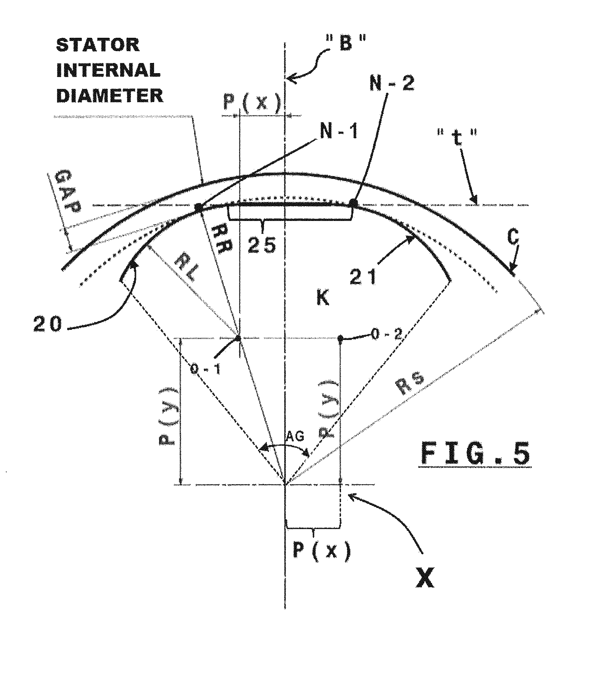

ATTENTION: Thus, for greater clarity and simplicity, in the description that follows and in the relative claims reference will be made to the characteristics illustrated in the two figures 4 and 5, which in fact show said cross sections, while it remains understood that what will explained and claimed will have to refer and extend to the whole material structure of the motor, that is to its three dimensions, relative both to the rotor and the stator.

This simplification is given for the only purpose of providing a clearer description, and thus it is assumed that this is understood by a person skilled in the art as:

- not limiting the invention;
- and referring unambiguously to the whole material structure of the motor, referred to the tree dimensions.

According to the invention, the outside perimeter of the rotor stack is made up of a plurality of identical projecting lobes 6a, 6b, 6c, ..., alternating with a respective plurality of identical recesses 7a, 7b, 7c, ....

Each of said projecting lobes delimits, together with said central axis X, a respective angular sector containing within it a respective one of said seats 30, 31, 32, and exhibits a respective outside shape, indicated by the same numbering arrangement (see Fig. 4).

With reference to the lobe 6a, it defines a mechanical angle "AG" having as its vertex said central axis "X" and for two sides the segments 10, 11 that join said axis "X" to the two opposite ends 13, 14 of the respective lobe 6a.

Concerning the explanation just given above, said central axis "X" is shown with the relative vertex; thus from this point on reference will be made to said central axis only by mentioning the respective vertex, which will be indicated with the same symbol "X", and which is the intersection of said axis with a plane perpendicular to it.

For the construction of said lobe, the following instructions should be followed:

1) From said vertex "X", draw the bisecting line "B" which intercepts the circle "C" that inscribes the laminations of the rotor; said bisecting line delimits on its sides two semi-lobes 6a-1 and 6a-2 symmetrical to said bisecting line "B".
2) Now draw two arcs 20, 21 (Fig. 5), with each arc being centred on a respective centre O-1, O-2 symmetrical with respect to the respective bisecting line; each of said centres is thus included within a respective one of said lobes 6a-1 and 6a-2.

Moreover, the two arcs 20, 21 are determined symmetrically to the bisecting line "B" (Fig. 5), and thus their radius is the same.

3) Finally determine the straight line "t" orthogonal to said bisecting line "B" and tangential to said two arcs 20, 21; these arcs are thus determined so as to intercept but not extend past said straight line "t" at a respective point N-1, N-2, as is clearly shown in Figure 5.

Between said points N-1, N-2 on the straight line "t" is thus defined the tangential segment 25.

4) Determine then the external profile of each lobe as resulting from the composition of:

- said two arcs 20, 21, wherein each arc is centred on a respective centre O-1, O-2 included within said mechanical angle "AG" and symmetrical with respect to the respective bisecting line "B",
- the segment 25 tangential to said two arcs 20, 21 and included between the respective tangent points N-1, N-2.

With the above information, the expert in the field can easily distinguish, with simple experiments, a position nearly optimal for said centres O-1, O-2 and for the radius of said arcs 20, 21 so as to achieve a significant reduction of the drawbacks mentioned above.

However, some advantageous improvements of the invention have been found with relative precision:

- in a first improvement, each of said centres O-1, O-2 has the following coordinates, with respect to said bisecting line "B":

$$P(x) = 4\Pi \cdot (R + gap)/(24.514 \cdot 2pm)$$

where:
- P(x) is the distance of each of said points O-1, O-2 from said bisecting line "B";
- R is the radius of the circle "C" having a centre on "X" and inscribing the laminations of the rotor;
- gap is the minimum distance of the motor from the stator, and thus it is the difference between the internal radius Rs of the stator and said radius "C".

Said gap is thus the interval that radially separates said circle "C" from the internal profile of the stator; said gap is chosen arbitrarily on the basis of the constructive restraints and limits.

- p is the number of pole pairs (that is, half the number of permanent magnets);
- m is the number of phases of the power supply.

For what concerns the second coordinate of said two points O-1, O-2, the relative value was found as follows:

$$P(y) = R/m$$

where

- P(y) is the distance of the projection "K" of each of said points O-1, O-2 on said bisecting line "B", from said vertex "X";
- R is the radius that inscribes the rotor.

Thus it follows that the radius "RL" of said half lobes 20, 21 is:

$$RL = (Rs\text{-}gap) - \sqrt[2]{[P(x)^2 + P(y)^2]}$$

where Rs is the internal diameter of the stator, as shown in Fig. 5.

It is also known that said "gap" distance must be as small as possible, and therefore it is essentially delimited by restraints of constructive type, and thus it is automatically and immediately defined by the manufacturer of the motor.

For what concerns the amplitude of the angle "AG" of the lobe in the construction phase, it should be considered that all said lobes are adjacent, and therefore each lobe is such that where one lobe ends the next one begins.

Thus, if "p" is the number of polar pairs, the number of lobes is naturally equal to: 2p.

In conclusion, each lobe has an angle AG at the vertex "X" equal to:

$$AG = 360°/2p$$

And therefore, the definition of the external geometry of the rotor is thereby exactly defined.

Naturally, the above indicators should not be considered in an absolute sense; in fact it has been advantageously found that it is still possible to obtain a satisfactory performance if the coordinates P(x) and P(y), and also the radius RL, remain within tolerances of ±15% from their nominal value defined above.

And therefore it follows that, by construction requirements, said axis "B" becomes the bisecting line of said angle "G".

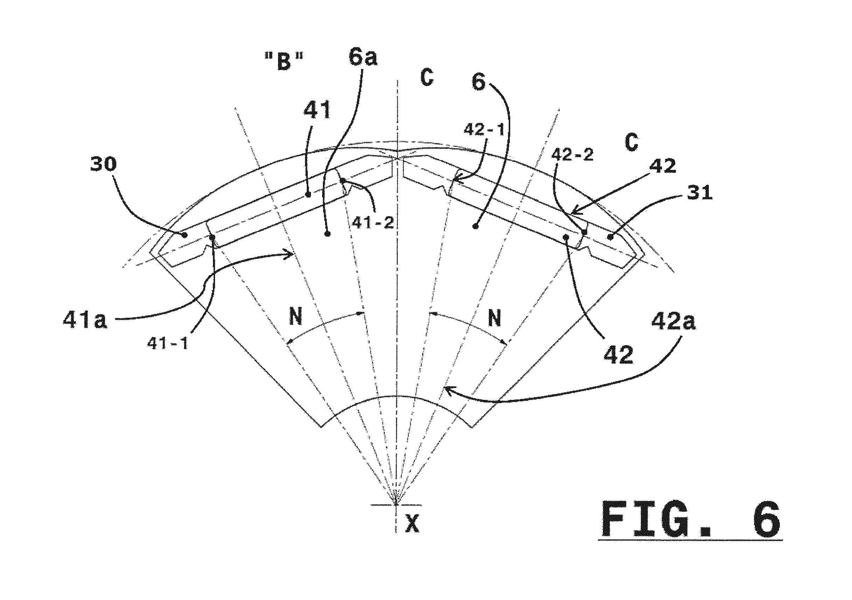

In a further improvement, and with reference to Fig. 6, said seats 30, 31, ... have a substantially lowered section, so that the relative magnets 41, 42, ... also have a completely similar section.

In this case, the relative median straight lines 41 a, 42a, ... are considered plotted within the respective magnets.

Each of said median lines naturally intersects the lateral edges of the relative magnet in two corresponding points: if we consider the magnet 41, the respective median line 41 a, orthogonal to said bisector "B", intercepts said lateral edges at two respective points 41-1 and 41-2.

It was found that an optimal definition of said magnet 41 is obtained if the angle "N" at the vertex "X" subtended between said two points 41-1 and 41-2 is:

N = 100°/p, where p naturally represents the number of polar pairs.

In the case in point too, the value of "N" can advantageously vary within tolerances of ±15% from the nominal value defined above.

It was also experimented that, with reference to Fig. 4, a further improvement is obtained if the minimum width "So" (Slot opening) between the more internal reciprocally faced portions "Ca" and "Cb" of adjacent caves of the stator is also dimensioned on the basis of the following relationship:

$$So = 4\Pi \cdot (R + gap) / (3.846 \cdot 2pm)$$

wherein the symbols have been defined above.

In this manner, both a dimensional characteristic of the rotor, that is, said P(x), and a dimensional characteristic of the stator, that is, said "So", are correlated, in the sense that both are directly proportional to the radius of the stator (R+ gap).

In the case in point too, the value of "So" can advantageously vary within tolerances of ±15% from the nominal value defined above.

It was also determined that the optimal value of the parameter "g", which determines the gap that radially separates said circumference "C" from the external profile of the rotor, must be smaller than 0.5 mm.

## Claims

1. Permanent magnet electric motor, comprising:

   • a stator (1) provided with a plurality of ferromagnetic poles, and made by a stator stack comprising a plurality of ferromagnetic laminations stacked and arranged in order to placed them orthogonal to a central axis (X)
   • a rotor (2) made up a rotor stack with a plurality of ferromagnetic laminations, stacked and arranged in order to placed them orthogonal to same a central axis (X) of said stator,
   • and a plurality of seats (30, 31, 32...) arranged inside said rotor stack, basically with a lowered shape and oriented parallel to said central axis (X), distributed on the perimeter close to the outer surface of said rotor, and able to lodge a respective plurality of permanent magnets (41, 42...), wherein the perimeter of the rotor stack is made up with a plurality of leaning lobes (6a, 6b" 6c...) alternate to a respective plurality of recesses (7a, 7b, 7c...),
   • and wherein said leaning lobes are symmetrical with respect to a relevant bisector (B) passing on said central axis (X),
   • each of said leaning lobes being inscribed inside a circle centered on said (X) axis and orthogonal to it,

   **characterized in that** :

   - each of said lobes (6a, 6b, 6c...) delimitates, together with said central axis (X), a respective angular sector containing in it a respective of said seats (31, 32, 33...),
   - each of said leaning lobes (6a, 6b, 6c...) shows an outer shape resulting by the composition of:
   - two circular arcs (20, 21), having the same radius, wherein each of said arcs is centered on a respective center (O-1, O-2) comprised inside of the area of the respective angular sector and symmetrical with respect to its bisector (B),
   - and the segment which is tangent 25) to said two circular arcs (20, 21) and comprised between the respective tangent points (N1, N2).

2. Electric motor according to claim 1, **characterized in that** the coordinates of said centers (O-1, O-2), with respect to the relevant bisector, are as follows: the distance (P(X)) of said centers from the respective bisector (B) is **P(x) = 4Π. (R+ gap)/ (24,514 . 2pm) ± 15%,** wherein the used symbols are defined in the attached description.

3. Motor according to claim 2, **characterized in that** the coordinates of said centers (O-1, O-2), with respect to the relevant bisector, are as follows: the distance (P(Y)) of the projection (R) on said centres (O-1, O-2) on said bisector (B) is **P(y) = R/m ± 15%,** wherein the used symbols are defined in the attached description.

4. Motor according to claim 2 or 3, **characterized in that** the radius of sad circular arcs (20, 21) centered on said centers (O-1, O-2), is equal to:

$$RL = : \quad RL = [\ (Rs\text{-}gap) - {}^{2}\sqrt{(P(x)^{2} + P(y)^{2}}]\pm 15\%\ ,$$

wherein the used symbols are defined in the attached description.

5. Motor according to any of the previous claims, **<u>characterized in that</u>** all said leaning lobes are equal to each other, as are the relevant recesses, and where a lobe ends, there the successive lobe starts, so that the amplitude on said central axis (X) of the angle ("AG") of any lobe is defined by: **AG = 360°/2p.**

6. Motor according to any of the previous claims, **<u>characterized in that</u>** said magnets (41, 42..) show a lowered section, and **in that** the angle (N) centered on said central axis (X) and passing through the intersections (**41-1, 41-2,---** 42-1, 42-2..) between the respective median line (41 a -- 42a) and the side edges of the respective magnet, shows an amplitude of **N =100°/p ± 15%.**

7. Motor according to any of the previous claims, **<u>characterized in that</u>** the minimum width "So" (Slot opening) between the inner and reciprocally faced portions (Ca, Cb) of the stator adjacent caves is based on the following relationship: **So = 4$\Pi$ . (R+ gap)/ (3,846 . 2pm) ± 15%,** wherein the used symbols are defined in the attached description.

8. Motor according to any of the previous claims, **<u>characterized in that</u>** the maximum gap width between said stator and said rotor is 0,5 mm.

**FIG. 1**

FIG. 2

X

B

B

1

FIG. 3

## FIG. 4

EP 2 621 064 A1

FIG.5

FIG. 6

Europäisches
Patentamt

European
Patent Office

Office européen
des brevets

# EUROPEAN SEARCH REPORT

Application Number

EP 12 19 5993

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/098172 A2 (BSH BOSCH SIEMENS HAUSGERAETE [DE]; KALAVSKY MICHAL [SK]; LAUBE FALK []) 13 August 2009 (2009-08-13) * page 8, line 11 - page 10, line 22; figures 1-4 * | 1 | INV. H02K29/03 H02K1/27 |
| Y | US 2011/050022 A1 (LI HU [JP] ET AL) 3 March 2011 (2011-03-03) * paragraph [0057] - paragraph [0096]; figures 1,2 * | 1-8 | |
| Y | EP 2 296 253 A2 (BOSCH GMBH ROBERT [DE]) 16 March 2011 (2011-03-16) * paragraph [0012] * * paragraph [0024] - paragraph [0036]; figures 1,2 * | 1-8 | |
| A | EP 2 012 410 A1 (FUJITSU GENERAL LTD [JP]) 7 January 2009 (2009-01-07) * abstract; figure 2 * | 1 | |

TECHNICAL FIELDS
SEARCHED       (IPC)

H02K

The present search report has been drawn up for all claims

| Place of search | Date of completion of the search | Examiner |
|---|---|---|
| Munich | 17 January 2013 | Türk, Severin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

# EP 2 621 064 A1

## ANNEX TO THE EUROPEAN SEARCH REPORT
## ON EUROPEAN PATENT APPLICATION NO.

EP 12 19 5993

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2013

| Patent document cited in search report | | Publication date | Patent family member(s) | | Publication date |
|---|---|---|---|---|---|
| WO 2009098172 | A2 | 13-08-2009 | DE 102008007565 | A1 | 06-08-2009 |
| | | | WO 2009098172 | A2 | 13-08-2009 |
| US 2011050022 | A1 | 03-03-2011 | KR 20090127935 | A | 14-12-2009 |
| | | | US 2011050022 | A1 | 03-03-2011 |
| | | | WO 2008139675 | A1 | 20-11-2008 |
| EP 2296253 | A2 | 16-03-2011 | DE 102009029472 | A1 | 24-03-2011 |
| | | | EP 2296253 | A2 | 16-03-2011 |
| EP 2012410 | A1 | 07-01-2009 | AU 2007244512 | A1 | 08-11-2007 |
| | | | CN 101421905 | A | 29-04-2009 |
| | | | EP 2012410 | A1 | 07-01-2009 |
| | | | JP 4135018 | B2 | 20-08-2008 |
| | | | JP 2007295676 | A | 08-11-2007 |
| | | | US 2010166575 | A1 | 01-07-2010 |
| | | | WO 2007125753 | A1 | 08-11-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009098172 A
- US 20040041486 A
- US 20040041489 A